# EUROPÄISCHE PATENTSCHRIFT

(11) **EP 3 436 329 B1**
(45) Veröffentlichungstag und Bekanntmachung des Hinweises auf die Patenterteilung: **14.10.2020**
(21) Anmeldenummer: 17712998.8
(22) Anmeldetag: 23.03.2017
(51) Int. Cl.: B62D 1/19

(54) **LENKSÄULE FÜR EIN KRAFTFAHRZEUG**
STEERING COLUMN FOR A MOTOR VEHICLE
COLONNE DE DIRECTION POUR VÉHICULE AUTOMOBILE

(30) Priorität: 31.03.2016 DE 102016205378
(43) Veröffentlichungstag der Anmeldung: 06.02.2019
(73) Patentinhaber: thyssenkrupp Presta AG, 9492 Eschen (LI); thyssenkrupp AG, 45143 Essen (DE)
(72) Erfinder: ANCELIN, Matthias, 8864 Reichenberg (CH); SCHNITZER, Hieronymus, 9487 Gamprin (LI); HEEB, Tobias, 9491 Ruggell (LI)
(74) Vertreter: thyssenkrupp Intellectual Property GmbH
(86) Internationale Anmeldenummer: PCT/EP2017/056914
(87) Internationale Veröffentlichungsnummer: WO 2017/167632

(56) Entgegenhaltungen:
- AU-B2- 442 041
- DE-A1- 10 130 908
- GB-A- 2 408 970
- US-A- 126 222
- US-A- 3 597 994

## Beschreibung

### Stand der Technik

Die Erfindung betrifft eine Lenksäule für ein Kraftfahrzeug, umfassend eine Manteleinheit, mit einem lenkgetriebeseitigen Ende und einem lenkradseitigen Ende, wobei die Manteleinheit ein Außenmantelrohr aufweist, in dem ein Innenmantelrohr teleskopierbar angeordnet ist, und in der eine Lenkspindel um eine Längsachse drehbar gelagert ist, wobei die Lenkspindel zumindest abschnittsweise eine Hohlwelle aufweist, in der eine Lenkwelle teleskopierbar angeordnet ist, und die Lenkspindel in einem hinteren Lager im lenkradseitigen Endabschnitt der Manteleinheit drehbar gelagert ist, wobei eine Spanneinrichtung vorgesehen ist, die einen Spannbolzen aufweist, der sich durch schlitzartige Öffnungen in den Seitenwangen und Durchgangsöffnungen in der Manteleinheit erstreckt, wobei durch manuelle Betätigung eines Spannhebels durch den Spannbolzen über ein Spanngetriebe in Fixierstellung eine Spannkraft auf die Seitenwangen ausgeübt wird, durch die das Außenmantelrohr kraftschlüssig zwischen den Seitenwangen eingespannt wird und dadurch relativ zur Trageinheit fixiert wird und ebenfalls das Außenmantelrohr radial auf dem Innenmantelrohr verspannt wird, oder die zur motorischen Verstellung einen motorischen Stellantrieb aufweist, von dem das Innenmantelrohr relativ zum Außenmantelrohr eingestellt werden kann.

Bei derartigen längsverstellbaren Lenksäulen kann das am bezüglich der Fahrtrichtung hinteren Ende der Lenkspindel angebrachte Lenkrad durch eine Längenverstellung in Längsrichtung, d.h. in Richtung der Lenksäulen-Längsachse im Fahrzeuginnenraum positioniert und dadurch an die Fahrerposition angepasst werden. Die Verstellbarkeit kann dadurch realisiert werden, dass die Manteleinheit eine in Richtung der Längsachse verschiebbare, d.h. axial teleskopierbare koaxiale Anordnung von Mantelrohren aufweist, bei der inneres Mantelrohr oder Innenmantelrohr in einem äußeren Mantelrohr oder Außenmantelrohr axial verschiebbar aufgenommen ist. Wie die Manteleinheit ist auch die darin koaxial angeordnete Lenkspindel längenverstellbar ausgebildet, indem eine Lenkwelle in einer Hohlwelle ebenfalls teleskopierbar aufgenommen ist. Zur Übertragung des Lenkmoments sind die Hohlwelle und die Lenkwelle durch formschlüssigen Eingriff drehmomentschlüssig miteinander verbunden.

Ein weiterer Vorteil ist, dass bei einem Fahrzeug-Crash, wenn der Fahrer auf das Lenkrad aufprallt, die Lenksäule in Längsrichtung zusammengeschoben werden kann. Dadurch kann wirksam verhindert werden, dass die Lenksäule weiter in das Innere der Fahrgastzelle eindringt und zu Verletzungen der Insassen führt. Außerdem kann durch zwischen den teleskopierbaren Mantelrohren oder zwischen der Manteleinheit und einer Trageinheit der Lenksäule angeordnete Energieabsorptionseinrichtungen die Aufprallenergie im Crash kontrolliert abgebaut werden, um das Verletzungsrisiko zu verringern.

Im Crashfall haben die in die Lenkspindel eingeleiteten Kräfte praktisch immer eine Kraftkomponente quer zur Längsachse, was zu einer radialen Durchbiegung der Lenkspindel führt, insbesondere bei einem sogenannten Offset-Crash, bei dem der Körper im Winkel zur Längsachse auf das Lenkrad auftrifft. Die Durchbiegung der Lenkspindel kann dazu führen, dass die Lenkwelle nicht oder nur mit stark erhöhter Axialkraft in die Hohlwelle eingeschoben werden kann, wodurch die zum Teleskopieren der Lenksäule erforderliche Axialkraft, das sogenannte Crashniveau, unkontrolliert erhöht wird bis hin zu einer Blockierung der Lenksäule. Dadurch entsteht ein Sicherheitsrisiko.

Eine gattungsgemäße Lenksäule, bei der die Lenkwelle stabilisiert werden soll, ist beispielsweise aus der US 2007/0126222 A1 bekannt. Darin ist die Hohlwelle der Lenkspindel auf der einen Seite in einem vorderen Wälzlager gelagert, welches in dem vorderen Ende des Außenmantelrohrs angebracht ist, und auf der anderen Seite ist die in der Hohlwelle teleskopierbare Lenkwelle in einem hinteren Wälzlager gelagert, welches in dem hinteren, lenkradseitigen Ende des Innenmantelrohrs angebracht ist. Zusätzlich wird in dieser bekannten Lenksäulenanordnung die Lenkspindel in der Manteleinheit an einer Zwischenposition im Längenbereich zwischen dem vorderen und hinteren Lager in einem dritten Lager gelagert. Dieses Zwischenlager ist ebenfalls als Wälzlager ausgebildet und definiert eine zusätzliche koaxiale Abstützung der Hohlwelle in dem Außenmantelrohr. Durch die zusätzliche, radial spielfreie Abstützung im Zwischenlager soll die Steifigkeit der Lenkspindel erhöht und die Übertragung von Vibrationen auf das Lenkrad reduziert werden.

Nachteilig ist jedoch, dass durch das zusätzliche Lager aufgrund der Lagerreibung das Durchdrehmoment der Lenkspindel erhöht wird. Insbesondere ist das dritte Lager durch die überbestimmte Anordnung zwischen dem vorderen und hinteren Lager besonders empfindlich gegenüber Toleranzen der Lenkspindel, und kann in seiner Funktion beeinträchtigt oder beschädigt werden, was zu einem höheren Durchdrehmoment führen kann. Die hohen Toleranzanforderungen bedingen weiterhin einen entsprechend hohen Fertigungs- und Montageaufwand. Weiterhin sind hohe Kräfte für die Teleskop-Verstellung erforderlich, da eine Lenkspindel mit einer schon geringen Rundlaufabweichung durch das Teleskopieren in eine Zwangsstellung auf Grund des zusätzlichen Lagers bewegt wird.

Angesichts der vorangehend erläuterten Problematik ist es eine Aufgabe der vorliegenden Erfindung, eine verbesserte Lenksäule zur Verfügung zu stellen, welche eine höhere Funktionssicherheit bietet und einen geringeren Aufwand erfordert.

### Darstellung der Erfindung

Zur Lösung der vorgenannten Problematik wird erfindungsgemäß vorgeschlagen, dass zwischen lenkgetriebeseitigen Ende der Manteleinheit und dem hinteren Lager zwischen der Manteleinheit und der Lenkspindel ein Sicherheitselement angeordnet ist, welches einen umlaufenden radialen Sicherheitsabstand zwischen Manteleinheit und Lenkspindel freilässt, der kleiner ist als der Radialabstand zwischen Manteleinheit und Lenkspindel außerhalb des Sicherheitselements zwischen dem lenkgetriebeseitigen Ende der Manteleinheit und dem hinterem Lager, wobei das Sicherheitselement mit seiner Breite einen axialen Sicherheitsabschnitt begrenzt, dessen Breite kleiner ist als der Durchmesser des Sicherheitselements.

Das erfindungsgemäße Sicherheitselement bildet eine radiale Begrenzung für die Lenkspindel innerhalb der Manteleinheit. Die radiale Begrenzung sorgt im Crashfall dafür, dass die lokale radiale Deachsierung der Lenkspindel aufgrund der auftretenden Durchbiegung maximal innerhalb des Sicherheitsabstands erfolgen kann. Durch den dann erfolgenden radialen Anschlag der Lenkspindel oder der Manteleinheit an dem Sicherheitselement wird die radiale Auslenkung der Lenkspindel aufgrund der Durchbiegung zwischen dem vorderen und dem hinteren Lager auf einen Maximalwert begrenzt. Dieser Maximalwert kann durch die Bemessung des radialen Sicherheitsabstands sowie des Abstands des hinteren, lenkradseitigen Lagers zum Sicherheitselement im Verhältnis zum axialen Lagerabstand zwischen dem hinteren und dem vorderen Lager vorgegeben werden. Dadurch kann die Durchbiegung im Crashfall auf ein zulässiges Maß begrenzt werden, so dass die Lenksäule in jedem Fall sicher zusammengeschoben werden kann und eine zulässige Grenzkraft zum teleskopierenden Zusammenschieben der Lenkspindel nicht überschritten wird.

Bevorzugt ist die Lenkspindel in einem vorderen Lager im lenkgetriebeseitigen Endabschnitt der Manteleinheit gelagert ist oder außerhalb der Manteleinheit abgestützt ist.

Im Gegensatz zu dem im Stand der Technik bekannten Zwischenlager bildet das erfindungsgemäße Sicherheitselement im Normalbetrieb einer Lenksäule keine mechanische Verbindung zwischen der Lenkspindel und der Manteleinheit. Das Sicherheitselement ist bezüglich der Lenkspindel oder der Manteleinheit berührungsfrei angeordnet, wobei der radiale Abstand durch den Sicherheitsabstand gegeben ist. Der Sicherheitsabstand wird durch eine lokale Verringerung des radialen Abstands innerhalb der axialen Breite des Sicherheits-elements realisiert, d.h. dessen Abmessung in Richtung der Längsachse.

Ein Vorteil des erfindungsgemäßen Sicherheitselements ist, dass die maximale Durchbiegung der Lenkspindel im Crashfall auf einen akzeptablen Grenzwert begrenzt wird. Im normalen Betrieb ist es vorteilhaft, dass aufgrund der berührungslosen Anordnung keine Lagerreibung im Sicherheitselement wie im Stand der Technik im Zwischenlager auftreten kann. Außerdem liegen die Maß- und Formtoleranzen der Lenkspindel in radialer Richtung deutlich, in der Regel größenordnungsmäßig unterhalb des Betrags des Sicherheitsabstands. Folglich ist ein weiterer Vorteil, dass die durch die üblichen Fertigungstoleranzen die Funktion der Lenkung nicht beeinträchtigt wird. Entsprechend kann der Fertigungsaufwand geringer ausfallen als im Stand der Technik. Außerdem ist kein zusätzliches Lager erforderlich. Ein weiterer Vorteil des erfindungsgemäßen Sicherheitselement ist, dass eine zu große Durchbiegung der Lenkspindel verhindert wird, wenn in die Lenkwelle ein Drehmoment eingeleitet wird und diese gegen Rotation durch einen Schlossbolzen einer Wegfahrsperre, beispielsweise eines Lenkradschlosses, gesperrt ist. In solchen Fällen biegt sich die Lenkspindel durch und es kommt zum Anliegen der Lenkspindel an dem Sicherheitselement. Somit ist eine weitere Durchbiegung verhindert und es kann somit nicht zum Herausspringen des Schlossbolzens aus einer Rastöffnung eines auf der Lenkspindel fixierten Raststerns kommen.

Das Sicherheitselement hat eine vorgegebene Breite in axialer Richtung, die kleiner ist als der axiale Lagerabstand zwischen der vorderen und dem hinteren Lager. Dadurch begrenzt es einen mit seiner Breite einen axialen Sicherheitsabschnitt. Bevorzugt ist die Breite des Sicherheitsabschnitts kleiner als der Durchmesser des Sicherheitselements.

Es ist vorteilhaft, dass das Sicherheitselement in einem Längenbereich der Hohlwelle angeordnet ist, in dem die Lenkwelle in die Hohlwelle axial einführbar ist, bevorzugt in einem Endbereich der Hohlwelle. Die Lenkwelle ist in axialer Richtung in das offene Ende teleskopartig eingeführt bzw. eingeschoben. Abhängig von der jeweiligen Verstellposition in Längsrichtung taucht die Lenkwelle im normalen Betrieb in Längsrichtung mehr oder weniger weit in den Endbereich in den Öffnungsquerschnitt der Hohlwelle ein. Dabei ist die Lenkwelle in der Hohlwelle in Längsrichtung verschiebbar in einem Gleit- oder Wälzlager linear geführt. Im Normalbetrieb ist diese Lagerung spielarm, bei einem Wälzlager nahezu spielfrei in radialer Richtung. Durch die im Crashfall auftretende Biegebeanspruchung werden jedoch erhebliche radiale Kräfte auf die Lagerung ausgeübt, so dass unter ungünstigen Bedingungen insbesondere in dem Endbereich der Hohlwelle am Übergang zur Lenkwelle eine größere Durchbiegung auftreten kann. Daher kann durch eine Positionierung des erfindungsgemäßen Sicherheitselements im Endbereich der Hohlwelle, wo die Lenkwelle eingeführt ist, die maximale Durchbiegung besonders effektiv begrenzt werden.

Vorzugsweise kann das Sicherheitselement in einem Längenbereich angeordnet sein, in dem sich die Hohlwelle innerhalb der Manteleinheit erstreckt, und sich bevorzugt innerhalb des Innenmantelrohrs befindet. Die räumliche Anordnung zwischen Hohlwelle und Innenmantelrohr in axialer Richtung bleibt auch im Crashfall erhalten. Dadurch ist gewährleistet, dass das Ringelement für die erfindungsgemäße radiale Abstützung der Lenkspindel jederzeit sicher zur Verfügung steht.

Eine Manteleinheitslänge bestimmt sich aus der Distanz zwischen dem hinteren Lager und dem lenkgetriebeseitigen Ende der Manteleinheit, wobei das Sicherheitselement bevorzugt in der Mitte der Manteleinheitslänge ± 25% der Manteleinheitslänge, bevorzugt ±10% der Manteleinheitslänge und ganz besonders bevorzugt ±5% der Manteleinheitslänge, angeordnet ist. Mit der Mitte der Manteleinheitslänge ist die Hälfte der Distanz zwischen dem hinteren Lager und dem lenkgetriebeseitigen Ende der Manteleinheit gemeint. Bei der Bestimmung der Manteleinheitslänge ist von der maximalen Distanz zwischen dem hinteren Lager und dem lenkgetriebeseitigen Ende der Manteleinheit auszugehen, d.h. wenn das Innenmantelrohr so weit wie möglich aus dem Außenmantelrohr heraus teleskopiert ist.

Eine bevorzugte Ausführung der Erfindung sieht vor, dass das Sicherheitsselement als Ringelement ausgebildet ist. Das Ringelement, wegen seiner Funktion auch kurz als Crashring bezeichnet, hat zwischen seinem Innen- und Außendurchmesser eine radiale Ringbreite, die vom Betrag her kleiner ist als der radiale Abstand zwischen dem Außenumfang der Lenkspindel und dem Innenumfang der Manteleinheit im Längenbereich zwischen dem vorderen Lager bzw. dem lenkgetriebeseitigen Ende der Manteleinheit und dem hinteren Lager. Entsprechend bildet die Differenz zwischen dem radialen Abstand und der Ringbreite den erfindungsgemäß verbleibenden Sicherheitsabstand, um den sich die Lenkspindel im Crashfall maximal durchbiegen kann.

Es ist vorteilhaft, dass das Ringelement in der Manteleinheit angeordnet ist und die Lenkspindel mit dem radialem Sicherheitsabstand umgibt. Das Ringelement ist bezüglich der Längsachse bevorzugt koaxial zur Lenkspindel angeordnet, so dass die Lenkspindel zentral durch die Öffnung des Ringelements hindurchgeht, wobei der Sicherheitsabstand durch den freien Ringspalt gegeben ist, der sich über den gesamten Umfang der Lenkspindel erstreckt. In der Manteleinheit kann das Ringelement fixiert sein. Durch das Ringelement wird der offene Durchmesser der Manteleinheit zwischen dem vorderen und hinteren Lager lokal verringert. Im Bereich der axialen Breite des Ringelements kann sich die Lenkspindel im Crashfall folglich nur so weit durchbiegen, bis sie mit ihren Außenumfang innerhalb der Öffnung des Ringelements radial anschlägt.

Das Ringelement kann als separates Bauteil gefertigt werden, welches die Grundform einer hohlzylindrischen Buchse hat, die in axialer Richtung in das offene Ende der Manteleinheit eingesetzt und fixiert werden kann. Die Festlegung in axialer Richtung kann durch eine kraft- und/oder form- und/oder stoffschlüssige Verbindung erfolgen, beispielsweise durch Einpressen. Gegebenenfalls kann eine Verklebung oder Verschweißung erfolgen, oder es können Formschlusselemente zur axialen und/oder umfangsseitigen Festlegung vorgesehen werden.

Bevorzugt weist das als Ringelement ausgebildete Sicherheitselement sich nach außen erstreckende Federzungen auf. Mit anderen Worten ist das Ringelement als Haltering ausgebildet. Diese Federzungen erstrecken sich bevorzugt in radialer Richtung ± 15° nach außen und werden beim Einführen des Ringelements in das offene Ende der Manteleinheit vorgespannt. Durch die vorgespannten Federzungen verbleibt das Ringelement nach der Montage in der Manteleinheit an seiner montierten Position. Das Ringelement kann aus einem Federstahl ausgebildet sein. Bevorzugt weist das Ringelement eine sich in axialer Richtung erstreckende Schulter auf, die bevorzugt umlaufend ausgebildet ist. Durch diese Schulter ist eine vergrößerte Innenmantelfläche des Ringelements geschaffen, an der sich die Lenkspindel im Fall der Durchbiegung abstützen kann.

Alternativ ist es denkbar und möglich, dass das Sicherheitsselement eine zumindest abschnittweise über den Umfang der Manteleinheit umlaufende radiale Einformung des Innen- oder Außenmantelrohrs aufweist. Das Ringelement kann dadurch einstückig mit der Manteleinheit ausgebildet werden, dass das Innen- oder Außenmantelrohr eine zumindest abschnittweise über seinen Umfang von außen in die Mantelrohrwandung eingeformte Sicke aufweist. Mit anderen Worten ist das Mantelrohr und das Sicherheitselement als ein integrales einstückiges Bauteil ausgebildet. Diese als Sicke ausgebildete radiale Einformung erstreckt sich über eine vorbestimmte Breite in axialer Richtung. In radialer Richtung ist die Sicke so tief in die Wandung eingeformt, dass zwischen dem lokal verringerten Innendurchmesser im Bereich der Sicke und der Lenkspindel der erfindungsgemäße radiale Sicherheitsabstand verbleibt.

Bevorzugt kann das Sicherheitselement in dem Innenmantelrohr angeordnet oder ausgebildet sein. Dadurch kann es im Crashfall nicht mit anderen Komponenten der Manteleinheit kollidieren, was der Funktionssicherheit zugute kommt.

Alternativ ist es möglich, das Ringelement auf der Lenkspindel anzuordnen und zu fixieren. In dieser Anordnung befindet sich der erfindungsgemäße radiale Sicherheitsabstand zwischen dem Außenumfang des Sicherheitselements und dem Innenumfang der Manteleinheit. Beispielsweise kann das Ringelement wie vorangehend beschrieben als Buchse oder Haltering ausgebildet sein, die mit ihrer Durchgangsöffnung auf der Lenkspindel angebracht ist, vorzugsweise auf der Hohlwelle, bevorzugt in einem Längenbereich, welcher sich innerhalb des Innenmantelrohrs erstreckt. Die Fixierung auf der Lenkspindel kann mittels geeigneter Kraft-, Form- und/oder Stoffschlussverbindungen erfolgen.

Bei der Anbringung auf der Lenkspindel sollte das Ringelement ein möglichst geringes Massenträgheitsmoment bezüglich einer Drehung um die Längsachse haben, damit die Lenkbewegung möglichst wenig beeinflusst wird.

Das Sicherheitselement kann bevorzugt aus Kunststoffmaterial ausgebildet sei. Beispielsweise kann ein Ringelement als Kunststoff-Buchse ausgebildet sein, die ein geringes Gewicht und Massenträgheitsmoment hat, mit geringem Aufwand kostengünstig und maßgenau gefertigt werden kann, beispielsweise als Spritzgussteil, und einfach montierbar ist, beispielsweise durch Ein- oder Aufpressen.

Weiterhin ist es vorteilhaft, dass das Sicherheitselement zumindest teilweise reibungsmindernd ausgestaltet ist. Die Komponenten der Manteleinheit und der Lenkspindel werden üblicherweise aus Metall - bevorzugt aus Stahl, Aluminium und dergleichen - gefertigt. Im Crashfall kommt die durchgebogene Lenkspindel mit dem Sicherheitselement in Kontakt, oder das Sicherheitselement mit der Manteleinheit.

Eine bevorzugte Ausführungsform der Erfindung sieht vor, dass zwischen dem Außenmantelrohr und dem Innenmantelrohr eine Energieabsorptionseinrichtung angeordnet ist. Eine derartige, an sich bekannte Energieabsorptionseinrichtung sorgt im Crashfall dafür, dass der auf das Lenkrad auftreffende Körper beim teleskopierenden Zusammenschieben der Lenksäule kontrolliert abgebremst wird. Dies erfolgt, indem in der Energieabsorptionseinrichtung kinetische Energie der in Längsrichtung relativ zueinander bewegten Mantelrohre absorbiert wird, d.h.in Verformungsarbeit und Wärme umgewandelt wird, beispielsweise durch plastische Deformation von Biege- und/oder Reißelementen.

### Beschreibung der Zeichnungen

Vorteilhafte Ausführungsformen der Erfindung werden im Folgenden anhand der Zeichnungen näher erläutert. Im Einzelnen zeigen:
- Figur 1: eine erfindungsgemäße manuell verstellbare Lenksäule in einer schematischen perspektivischen Ansicht,
- Figur 2: eine erfindungsgemäße elektrisch verstellbare Lenksäule in einer schematischen perspektivischen Ansicht,
- Figur 3: eine Teilansicht eines Innenmantelrohrs einer Lenksäule gemäß Figur 1 oder 2 in einer schematischen perspektivischen Ansicht auf dessen hinteres Ende,
- Figur 4: eine Teilansicht auf das vordere Ende des Innenmantelrohrs gemäß Figur 3,
- Figur 5: ein erfindungsgemäßes Sicherheitselement,
- Figur 6: einen Längsschnitt durch eine erfindungsgemäße Lenksäule gemäß Figur 1 in normalem Betriebszustand,
- Figur 7: einen Längsschnitt durch eine erfindungsgemäße Lenksäule wie in Figur 4 nach einem Crash,
- Figur 8: einen Längsschnitt eine Lenksäule gemäß dem Stand der Technik nach einem Crash,
- Figur 9: ein Längsschnitt durch ein erfindungsgemäßes Innenmantelrohr in einer weiteren Ausführungsform,
- Figur 10: ein erfindungsgemäßes Innenmantelrohr mit einer Crasheinrichtung in einer Seitenansicht,
- Figur 11: eine Detailansicht des Innenmantelrohrs gemäß Figur 10 in normalem Betriebszustand,
- Figur 12: eine Detailansicht wie in Figur 11 nach einem Crash,
- Figur 13: ein Längsschnitt durch eine alternative erfindungsgemäße Lenksäule in normalem Betriebszustand ähnlich Figur 6,
- Figur 14: ein Längsschnitt durch eine weitere alternative erfindungsgemäße Lenksäule in normalem Betriebszustand ähnlich Figur 6,
- Figur 15: eine Teilansicht auf das vordere Ende des Innenmantelrohrs mit einem alternativen als Haltering ausgebildeten Sicherheitselement
- Figur 16: ein erfindungsgemäßes Sicherheitselement in einer alternativen Ausführungsform gemäß Figur 15
- Figur 17: ein teilweiser Längsschnitt des vorderen Ende des Innenmantelrohrs gemäß Figur 15.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

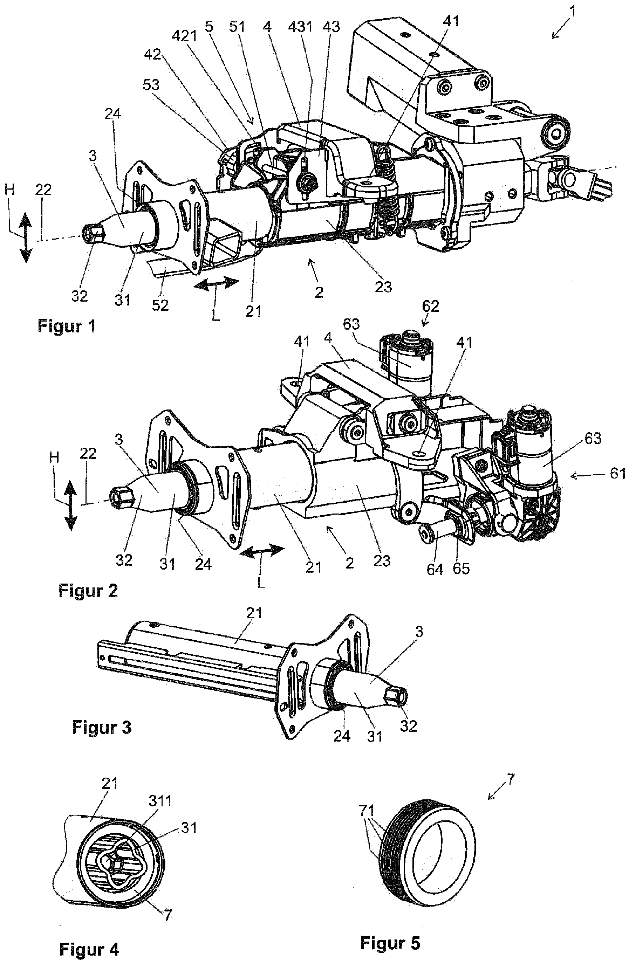

Figur 1 zeigt eine perspektivische Ansicht auf eine Lenksäule 1, wobei das bezüglich der Fahrtrichtung hintere Ende schräg nach links vorn auf den Betrachter zu gerichtet ist.

Die Lenksäule 1 umfasst eine Manteleinheit 2 mit einem Innenmantelrohr 21, welches koaxial bezüglich einer Längsachse 22 in einem Außenmantelrohr 23 aufgenommen und in Längsrichtung L teleskopierbar ist, was mit dem Doppelpfeil angedeutet ist.

In der Manteleinheit 2 ist koaxial um die Längsachse 22 drehbar eine Lenkspindel 3 gelagert. Die Lenkspindel 3 umfasst eine Hohlwelle 31, die nach hinten aus dem Innenmantelrohr 21 vorsteht und an ihrem dem Fahrer zugewandten Ende einen Befestigungsabschnitt 32 zur Anbringung eines nicht dargestellten Lenkrads aufweist.

Eine Trageinheit 4 weist Befestigungsmittel 41 zur Befestigung der Lenksäule 1 an einer nicht dargestellten Fahrzeugkarosserie auf. Die Manteleinheit 2 ist mit ihrem Außenmantelrohr 23 zwischen den einander quer zur Längsachse einander gegenüberliegenden Seitenwangen 42 und 43 der Trageinheit 4 angeordnet.

Eine Spanneinrichtung 5 weist einen Spannbolzen 51 auf, der sich durch schlitzartige Öffnungen 421 und 431 in den Seitenwangen 42 und 43 und Durchgangsöffnungen in der Manteleinheit 2 erstreckt. Durch den Spannbolzen 51 kann durch manuelle Betätigung eines Spannhebels 52 über eine Spanngetriebe 53, welches in an sich bekannter Weise als Nocken-, Keil- oder Kipphebelgetriebe ausgebildet sein kann, kann die die Spanneinrichtung in Fixierstellung gebracht werden, wobei eine Spannkraft auf die Seitenwangen 42 und 43 ausgeübt wird. Durch diese Spannkraft wird das Außenmantelrohr 23 kraftschlüssig zwischen den Seitenwangen 42 und 43 eingespannt und dadurch relativ zur Trageinheit 4 und damit auch relativ zur Fahrzeugkarosserie fixiert.

Wird die Spanneinrichtung 5 durch Betätigung des Spannhebels 52 in die Löseposition gebracht, so dass keine Spannkraft mehr wirkt, und der Spannbolzen 52 kann in den Öffnungen 421 und 431nach oben oder nach unten verschoben werden, so dass eine Verstellung eines an dem Befestigungsabschnitt 32 angebrachten Lenkrads in Höhenrichtung H möglich ist, wie mit dem Doppelpfeil angedeutet.

In Fixierstellung wird ebenfalls das Außenmantelrohr 23 radial auf dem Innenmantelrohr 21 verspannt, so dass die Lenkradposition in Längsrichtung fixiert ist. In Lösestellung wird die Verspannung gelöst, so dass das Innenmantelrohr 21 in Längsrichtung L relativ zum Außenmantelrohr 23 verstellbar ist. Im Einzelnen kann dann das Innenmantelrohr 2 nach vorn - in der Darstellung von links nach rechts - in den Öffnungsquerschnitt des Außenmantelrohrs 23 eingeschoben und zur Einstellung der Längsposition in Längsrichtung L positioniert werden. Durch Betätigung des Spannhebels 52 kann die Spanneinrichtung 5 festgestellt werden, wobei das Innenmantelrohr 21 in der eingestellten Längsposition reibschlüssig im Außenmantelrohr 23 festgespannt wird. Zugleich wird die Manteleinheit 2 in der eingestellten Höhenposition in Höhenrichtung H zwischen den Seitenwangen 42 und 43 ebenfalls reibschlüssig eingespannt und fixiert.

Figur 2 zeigt in derselben Ansicht wie Figur 1, die zur motorischen Verstellung in Höhenrichtung H einen motorischen Stellantrieb 61 und zur motorischen Verstellung in Längsrichtung L einen motorischen Stellantrieb 62 aufweist. Die Stellenantriebe 61 und 62 weisen jeweils einen Elektromotor 63 auf, von dem jeweils eine Spindel 64 und eine Spindelmutter 65 drehend relativ zueinander antreibbar sind, so dass das Innenmantelrohr 21 relativ zum Außenmantelrohr 23 in Längsrichtung L eingestellt werden kann, und entsprechend die Manteleinheit 2 relativ zur Trageinheit 4 in Höhenrichtung H.

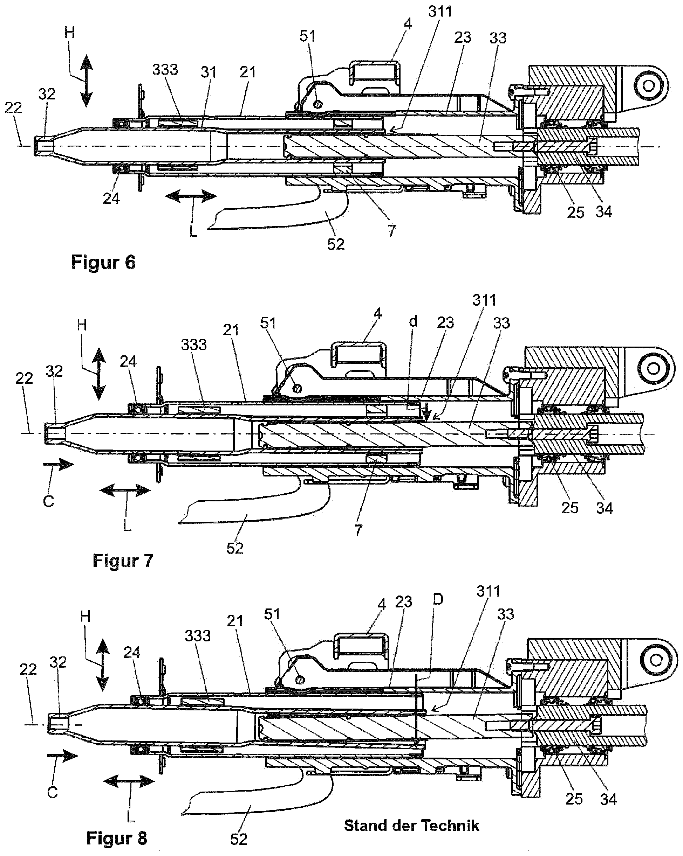

Um die Längenverstellbarkeit zu ermöglichen, ist die Lenkspindel 3 ebenfalls in Längsrichtung teleskopierbar ausgestaltet. Wie in Figur 6 und 7 dargestellten Längsschnitten entnehmbar, ist hierzu in die Öffnung am vorderen, offenen Ende 311 der Hohlwelle 31 eine Lenkwelle 33 ebenfalls in Längsrichtung teleskopierbar eingesetzt. Zur Übertragung des über das Lenkrad in die Hohlwelle 31 eingebrachten Lenkmoments greift die Lenkwelle 33 mit einem unrunden Profilquerschnitt in einen damit korrespondierenden Profilquerschnitt der Hohlwelle 31 drehmomentschlüssig ein. Die Hohlwelle 31 kann beispielsweise ein Mehrkant-Profil haben, welches in Figur 4 erkennbar ist, die eine Ansicht auf das vordere, dem Befestigungsabschnitt 32 abgewandte Ende des Innenmantelrohr 21 zeigt, welches in ausgebautem Zustand in Figur 3 gezeigt ist.

Figur 3 und Figur 4, sowie den Schnittansichten von Figur 6 und 7 ist die koaxiale Anordnung der Hohlwelle 31 in dem Innenmantelrohr 21 entnehmbar. Die Hohlwelle 31 ist im hinteren, also lenkradseitigen Ende des Innenmantelrohrs 21 in einem ersten Lager 24 drehbar gelagert, welches bevorzugt als Wälzlager ausgebildet ist. Die Länge der Hohlwelle 31 ist so bemessen, dass sie an ihrem vorderen Ende, wo sich die Öffnung 311 befindet, etwa mit dem vorderen Ende des Innenmantelrohrs 21 abschließt.

Die mit ihrem hinteren Abschnitt in die Hohlwelle 31 axial in die Hohlwelle 31 eingesetzte Lenkwelle 33 weist einen vorderen Lagerabschnitt 34 auf, wo sie in einem zweiten Lager 25, drehbar in dem vorderen Endbereich des Außenmantelrohrs 23 um die Längsachse 22 drehbar gelagert ist.

Durch das erste Lager 24, auch als hinteres oder lenkradseitiges Lager 24 bezeichnet, und das zweite Lager 25, auch als vorderes oder lenkgetriebeseitiges Lager 25 bezeichnet, ist die Lenkspindel 3 jeweils am hinteren und vorderen Ende in der Manteleinheit 2 in radialer Richtung koaxial definiert gehalten und gelagert.

Das Innenmantelrohr 21 ist im normalen Betrieb des Kraftfahrzeugs zur Positionierung des Lenkrads in Längsrichtung L relativ zum Außenmantelrohr 23 reibschlüssig fixiert. Wenn jedoch im Crashfall durch einen auf das Lenkrad auftreffenden Körper eines Fahrzeuginsassen eine hohe Crashkraft in Längsrichtung L nach vorn auf das Innenmantelrohr 21 ausgeübt wird, wird es unter Überwindung der reibschlüssigen Fixierung nach vorn in das Außenmantelrohr 23 axial eingeschoben.

Die Situation einer in einem Crashfall durch eine Crashkraft C - angedeutet durch den Pfeil C - teilweise zusammengeschobenen Manteleinheit 2 bei einer Lenksäule 1 nach dem Stand der Technik ist in Figur 8 dargestellt. Darin ist erkennbar, dass die Lenkspindel 3 in ihrer Längserstreckung zwischen dem ersten Lager 24 und dem zweiten Lager 25 eine Durchbiegung D aufweist, eingezeichnet mit dem Pfeil D. Durch die Durchbiegung D ist die Hohlwelle 31 nicht mehr koaxial in dem Innenmantelrohr 21 ausgerichtet, wie im normalen Betriebszustand, der für eine erfindungsgemäße Lenksäule 1 in Figur 6 gezeigt ist. Die Öffnung der in der Zeichnung nach unten abgebogenen Hohlwelle 31 ist in dem offenen Endbereich (in der Darstellung rechts) des Innenmantelrohrs 31 nach unten deachsiert, so dass die Lenkwelle 33 relativ zur Hohlwelle 31 abgeknickt ist, also durchgebogen.

Die in Figur 8 dargestellte Situation kann dazu führen, dass die Lenkwelle 33 derart in der Hohlwelle 31 verkeilt ist, dass die Manteleinheit 2 durch die im Crashfall wirkende Crashkraft C nicht zusammengeschoben werden kann, so dass die Lenksäule 1 nicht nach vorn zurückweicht und es zu Verletzungen kommen kann.

Die erfindungsgemäße Lenksäule 1 weist ein erfindungsgemäßes Sicherheitselement auf, welches in einer ersten Ausführungsform als Ringelement 7 ausgebildet ist. Das Ringelement 7 ist in Figur 5 einzeln dargestellt. Es ist im Wesentlichen als hohlzylindrische Buchse ausgebildet und besteht bevorzugt aus einem Kunststoffmaterial. Auf seinem Außenumfang ist es mit einer Profilierung 71 versehen, beispielsweise mit umlaufenden Rippen oder einer Riffelung.

Das Ringelement 7 ist koaxial in das offene Ende des Innenmantelrohrs 21 eingesetzt, wie in Figur 4 erkennbar. Die Fixierung kann durch axiales Einpressen erfolgen, wobei die Profilierung 71, die ein geringfügiges Übermaß zum Innendurchmesser des Innenmantelrohrs 21 hat, beim Einpressen plastisch und elastisch verformt wird und für einen sicheren kraftschlüssigen Sitz in dem Innenmantelrohr21 sorgt. Alternativ oder zusätzlich kann eine stoffschlüssige Verbindung mittels Verkleben oder Verschweißen erfolgen.

Figur 6 ist entnehmbar, dass das Ringelement 7 im normalen Betriebszustand die dann koaxial im Innenmantelrohr 21 angeordnete Hohlwelle 31 allseitig mit radialem Abstand umschliesst. Dies ist der erfindungsgemäße Sicherheitsabstand. Das Ringelement 7 hat entsprechend keinen mechanischen Kontakt zur Lenkspindel 3. Folglich wird einer Drehung der Lenkspindel 3 durch das Ringelement 7 keine Reibung entgegengesetzt. Auch eine geringfügige Deachsierung der Lenkspindel 3 innerhalb der Manteleinheit 2 aufgrund von Bauteil- und Fertigungstoleranzen, die größenordnungsmäßig kleiner sind als der radiale Sicherheitsabstand zwischen dem Außenumfang der Hohlwelle 31 und dem Innenumfang des Ringelements 7, haben keinen nachteiligen Effekt.

Bevorzugt ist das Ringelement 7 in dem Endbereich der Hohlwelle 31 angeordnet, und zwar in Längsrichtung L in der Nähe der Öffnung 311, so dass das Ringelement 7 sich in einem Längsbereich befindet, in dem die Lenkwelle 33 in die Öffnung 311 eintaucht. Mit anderen Worten umgreift das Ringelement 7 die in der Hohlwelle 31 teleskopierende Lenkwelle 33.

Im Crashfall, der in Figur 7 dargestellt ist, kann die Lenkwelle 3 quer zur Längsachse 22 durchgebogen werden, in der Zeichnung nach unten. Bei der Erfindung wird die maximal mögliche Durchbiegung d jedoch dadurch begrenzt, dass die Lenkspindel 3, im gezeigten Beispiel die Hohlwelle 31, sich maximal um den Sicherheitsabstand zwischen dem Außendurchmesser der Hohlwelle 31 und dem Innendurchmesser des Ringelements 7 aus der Längsachse 22 verlagern kann, bis die Hohlwelle 31 innen radial an dem Ringelement 7 anschlägt. Somit ist die maximal mögliche Durchbiegung d deutlich kleiner als die Durchbiegung D im Stand der Technik, was in Figur 7 mit dem kürzeren Pfeil d angedeutet ist.

Ein Vorteil der Erfindung ergibt sich daraus, dass das Ringelement 7 durch die Anbringung zwischen dem Innenmantelrohr 21 und der Hohlwelle 31im Crashfall keiner Relativbewegung zwischen Manteleinheit 2 und Lenkspindel 3 ausgesetzt ist. Dadurch ist eine sichere Funktion gewährleistet und im Crashfall wird die maximale Durchbiegung d auf einen kleineren Wert begrenzt als im Stand der Technik. Dies sorgt dafür, dass im Crashfall die Manteleinheit 2 zusammengeschoben werden kann, ohne dass die gewünschte Nachgiebigkeit in axialer Richtung durch ein Verkeilen der Lenkwelle 33 in der Hohlwelle 31 beeinträchtigt werden könnte. Dadurch ergibt sich ein vorteilhafter Sicherheitsgewinn.

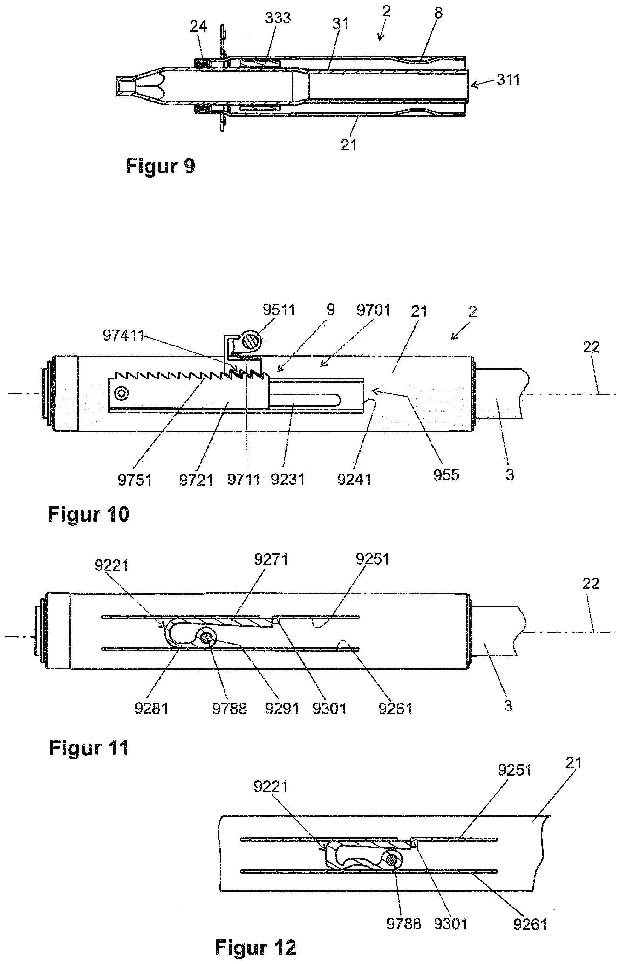

Figur 9 zeigt einen teilweisen Längsschnitt durch eine alternative Ausführung einer erfindungsgemäß ausgestalteten Manteleinheit 2. Dabei ist das erfindungsgemäße Sicherheits-element als von außen in die Wandung des Innenmantelrohrs 21 radial eingeformte, über den Umfang umlaufende Sicke 8 ausgebildet. Der erfindungsgemäße radiale Sicherheitsabstand entspricht wiederum dem radialen Abstand zwischen dem Außendurchmesser der Hohlwelle 31 und dem Innendurchmesser im Bereich der Sicke 8.

Ein beispielsweise als Ringelement 7, Sicke 8 oder in einer anderen Bauform ausgebildetes erfindungsgemäßes Sicherheitselement kann gleichermaßen in einer manuell verstellbaren Lenksäule 1 gemäß Figur 1 oder in einer elektromotorisch verstellbaren Lenksäule gemäß Figur 2 realisiert werden. Ebenfalls ist es denkbar und möglich, das erfindungsgemäße Sicherheitselement in eine nicht verstellbare oder lediglich in der Höhe verstellbare Lenksäule einzubauen, wenn diese Mantelrohre umfasst, die im Crashfall teleskopartig kollabierbar sind.

Figuren 10, 11 und 12 zeigen eine Energieabsorptionseinrichtung 9 mit einer Crashaktivierung durch den manuell betätigbaren Spannhebel 52 der Spanneinrichtung 5. Der Spannhebel 52 ist in Richtung der Längsachse 22 (in Längsrichtung L) unverschiebbar mit dem Außenmantelrohr 23 verbunden, d.h. stützt sich in Längsrichtung L an dem Außenmantelrohr 23 ab. Die Energieabsorptionseinrichtung 9 ist bei einer Relativbewegung zwischen dem Innenmantelrohr 21 und dem Außenmantelrohr 23 im Crashfall im Kraftfluss zwischen dem Innenmantelrohr 21 und dem Außenmantelrohr 23 angeordnet.

Mittels einer Crasheinrichtung 9701 kann die Energieabsorptionseinrichtung 9 durch Betätigung des Spannhebels 52 aktiviert werden. Die Crasheinrichtung 9701 umfasst das Arretierteil 9711 in Form eines Zahnsteins 9711 und das Eingriffsteil 9721 in Form der Zahnplatte 9721. Die Zahnplatte 9721 ist über ein Energieabsorptionselement in Form eines Biegedrahts oder -streifens 9221 mit dem Innenmantelrohr 21 verbunden und hat auf einer Seitenfläche, die parallel zur Längsachse 22 und parallel zur Drehachse des Spannhebels 52 ausgerichtet ist, als Verzahnung 9751 ausgebildete Formschlusselemente. Der Zahnstein 9711 hat eine der Verzahnung 9751 gegenüberliegende, korrespondierende Verzahnung 97411, die formschlüssig in die Verzahnung 9751 eingreifen kann. Bevorzugt haben die Zähne der Verzahnung 97411, 9751 einen sägezahnförmigen Querschnitt. Die Zahnplatte 9711 weist einen sich zur Drehachse parallelen und der Mantelrohr 21 zugewandt erstreckenden Mitnehmer 9788 auf.

Durch Drehung des Spannbolzens 51 können die Verzahnungen 9751 und 97411 miteinander in Eingriff gebracht werden, so dass im Crashfall bei einer Relativbewegung zwischen dem Innenmantelrohr 21 und dem Außenmantelrohr 23 eine Kraftübertragung von dem Spannbolzen 51 über den Zahnstein 9711, die Zahnplatte 9721 und den Biegedraht oder -streifen 9221 erfolgt.

Die Zahnplatte 9721 ist mit einem Biegedraht oder -streifen 9221 verbunden, der in einem Gehäuse angeordnet ist, welches von der im Querschnitt U-förmigen Schiene 955 in Verbindung mit einem Abschnitt des Innenmantelrohrs 21 gebildet wird. Das Eingriffsteil 9721 weist hierzu den von einem Stift gebildeten Mitnehmer 9788 auf, der durch einen Schlitz 9231 in der Wand 9241 der Schiene 955 ragt. Der Schlitz 9231 erstreckt sich in die Richtung der Längsachse 22. Die Schiene weist zusätzlich zu der Wand 9241 einen Seitenschenkel 9251 und einen Seitenschenkel 9261 auf, wobei jeder dieser Seitenschenkel 9251, 9261 im Wesentlichen parallel zur Längsachse 22 verläuft. Unter "im Wesentlichen parallel" wird eine Abweichung in einem Raumwinkel bis zu ±10° verstanden.

Über den durch diesen Schlitz 9231 ragenden Mitnehmer 9788 ist das Eingriffsteil 9721 weiter in Längsrichtung des Innenmantelrohrs 21 von diesem verschiebbar geführt. Denkbar und möglich ist auch eine Anordnung des Mitnehmers am Biegedraht oder -streifen 9221. Die verschiebbare Führung des Eingriffsteils 9721 kann auch in anderer Weise als dargestellt erfolgen.

Der Biegedraht oder-streifen 9221 besitzt über eine Umbiegung von 180° verbundene Schenkel 9271, 9281, die sich im Wesentlichen in Richtung der Längsachse 22 erstrecken. Die beiden Schenkel 9271, 9281 liegen an gegenüberliegenden Seiten des Gehäuses an, und zwar an den Innenflächen der Seitenschenkel 9251, 9261 der Schiene 955. Der Rollbiegeradius des Biegedrahts oder -streifens 2921 bei seiner Verformung, insbesondere während der fortschreitenden Biegung, im Crashfall wird dadurch begrenzt und bestimmt.

Zur Verbindung der Zahnplatte 9721 mit dem Biegedraht oder -streifen 9221 ragt der stiftförmige Mitnehmer 9788 in eine Bohrung 9291 im Schenkel 9281. Andere Verbindungen der Zahnplatte 9721 mit dem Biegedraht oder-streifen 9221 sind denkbar und möglich.

Der andere, nicht mit der Zahnplatte 9721 verbundene Schenkel 9271 des Biegedrahts oder - streifens 9221 stützt sich an einem Anschlag 9301 der Schiene 55 ab, von dem er bei einer Verschiebung der Manteleinheit 2 gegenüber der Trageinheit 4 in Richtung der Längsachse 22 mitgenommen wird. Andere Verbindungen des Schenkels 9271 mit dem Gehäuse, in dem der Biegedraht oder-streifen 9221 angeordnet ist, um den Schenkel 9271 im Crashfall in Richtung der Längsachse 22 mitzunehmen, sind denkbar und möglich.

Durch Drehung des Spannbolzens 51 kann die Crasheinrichtung aktiviert werden. Dazu können die Verzahnungen 9751 und 97411 miteinander in Eingriff gebracht werden, so dass im Crashfall bei einer Relativbewegung zwischen dem Innenmantelrohr 21 und dem Außenmantelrohr 23 eine Kraftübertragung von dem Spannbolzen 51 über den Zahnstein 9711, die Zahnplatte 9721 und den Biegedraht oder -streifen 9221 erfolgt.

Wenn im Crashfall eine einen Grenzwert überschreitende Kraft in Richtung der Längsachse 22 wirkt so wird das Innenmantelrohr 21 nach vorn in Richtung der Längsachse 22 gegenüber der das Außenmantelrohr 23 tragenden Trageinheit 4, die fest mit dem Fahrzeug verbunden ist, nach vorn, in eine zur Fahrzeugfront weisende Richtung verschoben, wobei sich teleskopierbare Abschnitte der Lenksäule, nämlich das Innenmantelrohr 21 und das Außenmantelrohr 23, axial ineinander schieben und sich das Innenmantelrohr 21 gegenüber der vom Zahnstein 9711 gehaltenen Zahnplatte 9721 verschiebt und hierbei der Biegedraht oder Biegestreifen 9221 verformt wird. Diese Verformung umfasst insbesondere die Änderung der Stelle der Umbiegung zwischen den Schenkeln 9271, 9281. Durch diese plastische Verformung des Biegedrahts oder-streifens 9221 wird Energie absorbiert, wodurch die Bewegung des Innenmantelrohrs 21 relativ zum Außenmantelrohr 23 kontrolliert abgebremst wird.

Im gezeigten Ausführungsbeispiel vergrößert sich die Dicke des Schenkels 9271 zu seinem freien Ende hin, beispielsweise keilförmig. Dadurch und da der Biegedraht oder-streifen 9221 zwischen den von den Seitenschenkeln 9251, 9261 gebildeten Seitenwänden des Gehäuses eingesperrt ist, kommt es bei einer zunehmenden Verschiebung des Mantelrohrs gegenüber der Trageinheit der Lenksäule schließlich zu einem Anlaufen des Abschnitts 9281 (im Bereich, in dem sie mit der Bohrung 9291 versehen ist) an den sich verdickenden Bereich des Schenkels 9271, wodurch es zu einer zusätzlichen Verformungsarbeit durch Kompression kommt.

Durch die geometrische Ausbildung des Biegedrahts oder -streifens 9221 kann eine gewünschte Kennlinie für die Energieaufzehrung erreicht werden. Hierzu kann der Querschnitt des Schenkels 9271 über seiner Länge in Bezug auf seine Fläche und/oder in Bezug auf seine Kontur mit einem vordefinierten Verlauf ausgebildet sein.

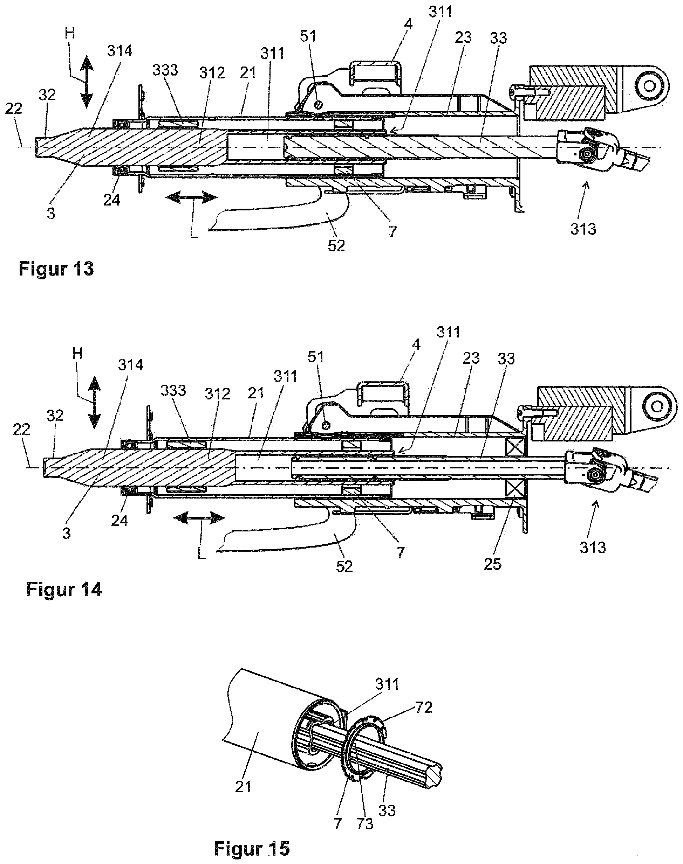

In Figur 13 ist ein Längsschnitt durch eine alternative erfindungsgemäße Lenksäule in normalem Betriebszustand ähnlich der Figur 6 dargestellt. Die Lenkspindel 3 weist eine Lenkwelle 33 auf, die in eine Öffnung 311 einer Hohlwelle 312 drehmomentschlüssig eingreift. Die Hohlwelle 312 ist teilweise hohl durch die Öffnung 311 ausgebildet, wobei das lenkradseitige Ende als Vollwellenabschnitt 314 ausgebildet ist. Die Lenkwelle 23 ist in dieser Ausführung nicht durch ein vorderes Lager abgestützt, sondern wird durch ein Universalgelenk 313, welches die Lenkspindel 3 mit einer nicht dargestellten Eingangswelle eines Lenkgetriebes verbindet, in radialer Richtung gehalten. Im Crashfall stützt das erfindungsgemäße Sicherheits-element 7 die Lenkspindel in radialer Richtung ab und verhindert eine zu große Durchbiegung der Lenkspindel 3 in radialer Richtung.

In Figur 14 ist ein Längsschnitt durch eine weitere alternative erfindungsgemäße Lenksäule in normalem Betriebszustand ähnlich der Figur 6 dargestellt. Die Lenkwelle 33 ist als Hohlwelle ausgebildet und mit einer Gabel eines Universalgelenks 313 drehmomentschlüssig verbunden. Die als Hohlwelle ausgebildete Lenkwelle 33 ist mittels des vorderen Lagers 25 in dem Außenmantelrohr 23 drehbar gelagert. Die Lenkwelle 33 greift in eine Öffnung 311 der Hohlwelle 312 ein. Die Hohlwelle 312 umfasst einen lenkradseitigen Vollwellenabschnitt 314.

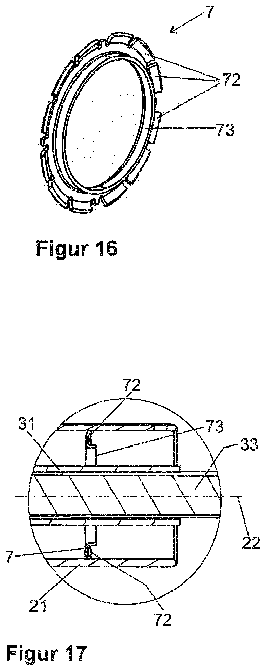

In der Figur 15 ist eine Teilansicht auf das vordere Ende des Innenmantelrohrs 21 mit einem alternativ als Haltering ausgebildeten Sicherheitselement 7 in einer teilweise auseinandergezogenen Darstellung abgebildet. Das als Haltering ausgebildete Sicherheitselement 7 wird koaxial in das offene Ende des Innenmantelrohrs 21 eingesetzt, wie in dem teilweisen Längsschnitt der Figur 17 erkennbar. Die Fixierung erfolgt durch axiales Einpressen, wobei die Federzungen 72, die ein geringfügiges Übermaß zum Innendurchmesser des Innenmantelrohrs 21 aufweisen, beim Einpressen elastisch verformt und somit vorgespannt werden und somit für einen sicheren kraftschlüssigen Sitz in dem Innenmantelrohr 21 sorgen. Die Federzungen 72 sind besonders gut in der Figur 16 zu erkennen. Die Federzungen erstrecken sich radial nach außen und sind dabei leicht angewinkelt bezogen auf eine Ebene, die orthogonal zur Längsachse 22 angeordnet ist. Das als Haltering ausgebildete Sicherheits-element 7 weist eine sich in axialer Richtung erstreckende, umfangsmäßig ausgebildete Schulter 73 auf. Durch diese Schulter 73 kann die Innenmantelfläche des Sicherheitselements 7 vergrößert werden. In der Figur 17 ist ein teilweiser Längsschnitt des vorderen Endes des Innenmantelrohrs dargestellt, wobei die leicht angewinkelten Federzungen 72 und die sich in axialer Richtung erstreckende Schulter 73 gut zu erkennen ist. Das Sicherheitselement 7 in Form eines Halterings ist aus Federstahl ausgebildet.

### Bezugszeichenliste

- 1: Lenksäule
- 2: Manteleinheit
- 21: Innenmantelrohr
- 22: Längsachse
- 23: Außenmantelrohr
- 24: erstes Lager
- 25: zweites Lager
- 3: Lenkspindel
- 31: Hohlwelle
- 311: Öffnung
- 312: Hohlwelle mit Vollwellenabschnitt
- 313: Universalgelenk
- 314: Vollwellenabschnitt
- 32: Befestigungsabschnitt
- 33: Lenkwelle
- 333: Raststern
- 34: Lagerabschnitt
- 4: Trageinheit
- 41: Befestigungsmittel
- 42, 43: Seitenwangen
- 421,431: Öffnungen
- 5: Spanneinrichtung
- 51: Spannbolzen
- 52: Spannhebel
- 53: Spanngetriebe
- 61, 62: Stellantrieb
- 64: Spindel
- 65: Spindelmutter
- 7: Ringelement
- 71: Profilierung
- 8: Sicke
- 9: Energieabsorptionseinrichtung
- 9221: Biegedraht
- 9231: Schlitz
- 9241: Wand
- 9251, 9261: Seitenschenkel
- 9271, 9281: Schenkel
- 9291: Bohrung
- 9301: Anschlag
- 955: Schiene
- 9701: Crasheinrichtung
- 9711: Arretierteil
- 9721: Eingriffsteil
- 9751: Verzahnung
- 97411: Verzahnung
- 9788: Mitnehmer

- L: Längsrichtung
- H: Höhenrichtung
- C: Crashkraft

## Patentansprüche

1. Lenksäule (1) für ein Kraftfahrzeug, umfassend eine Manteleinheit (2) mit einem lenkgetriebeseitigen Ende und einem lenkradseitigen Ende, wobei die Manteleinheit (2) ein Außenmantelrohr (23) aufweist, in dem ein Innenmantelrohr (21) teleskopierbar angeordnet ist, und in der eine Lenkspindel (3) um eine Längsachse (22) drehbar gelagert ist, wobei die Lenkspindel (3) zumindest abschnittsweise eine Hohlwelle (31) aufweist, in der eine Lenkwelle (33) teleskopierbar angeordnet ist, und die Lenkspindel (3) in einem hinteren Lager (24) im lenkradseitigen Endabschnitt der Manteleinheit (2) drehbar gelagert ist, wobei eine Spanneinrichtung (5) vorgesehen ist, die einen Spannbolzen (51) aufweist, der sich durch schlitzartige Öffnungen (421, 431) in den Seitenwangen (42, 43) und Durchgangsöffnungen in der Manteleinheit (2) erstreckt, wobei durch manuelle Betätigung eines Spannhebels (52) durch den Spannbolzen (51) über ein Spanngetriebe (53) in Fixierstellung eine Spannkraft auf die Seitenwangen (42, 43) ausgeübt wird, durch die das Außenmantelrohr (23) kraftschlüssig zwischen den Seitenwangen (42, 43) eingespannt wird und dadurch relativ zur Trageinheit (4) fixiert wird und ebenfalls das Außenmantelrohr (23) radial auf dem Innenmantelrohr (21) verspannt wird, oder die zur motorischen Verstellung einen motorischen Stellantrieb (62) aufweist, von dem das Innenmantelrohr (21) relativ zum Außenmantelrohr (23) eingestellt werden kann,
**dadurch gekennzeichnet,**
**dass** zwischen dem lenkgetriebeseitigen Ende der Manteleinheit (2) und dem hinteren Lager (24) zwischen der Manteleinheit (2) und der Lenkspindel (3) ein Sicherheitselement (7, 8) angeordnet ist, welches einen umlaufenden radialen Sicherheitsabstand zwischen Manteleinheit (2) und Lenkspindel (3) freilässt, der kleiner ist als der Radialabstand zwischen Manteleinheit (2) und Lenkspindel (3) außerhalb des Sicherheitselements (7, 8) zwischen dem lenkgetriebeseitigen Ende der Manteleinheit (2) und dem hinterem Lager (24), wobei das Sicherheitselement (7, 8) mit seiner Breite einen axialen Sicherheitsabschnitt begrenzt, dessen Breite kleiner ist als der Durchmesser des Sicherheitselements (7, 8).

2. Lenksäule nach Anspruch 1, **dadurch gekennzeichnet, dass** das Sicherheitselement (7, 8) in einem Längsbereich der Hohlwelle (31) angeordnet ist, in dem die Lenkwelle (33) in die Hohlwelle (31) axial einführbar ist.

3. Lenksäule nach einem der vorangehenden Ansprüche, **dadurch gekennzeichnet, dass** das Sicherheitselement (7, 8) in einem Längenbereich angeordnet sein, in dem sich die Hohlwelle (33) innerhalb der Manteleinheit (2) erstreckt.

4. Lenksäule nach einem der vorangehenden Ansprüche, **dadurch gekennzeichnet, dass** das Sicherheitselement (7) als Ringelement ausgebildet ist.

5. Lenksäule nach einem der vorangehenden Ansprüche, **dadurch gekennzeichnet, dass** das Sicherheitselement (8) in der Manteleinheit (2) angeordnet ist.

6. Lenksäule nach Anspruch 5, **dadurch gekennzeichnet, dass** das Sicherheitselement (8) in dem Innenmantelrohr (21) angeordnet ist.

7. Lenksäule nach Anspruch 5, **dadurch gekennzeichnet, dass** das Sicherheitsselement (8) eine zumindest abschnittweise über den Umfang der Manteleinheit (2) umlaufende radiale Einformung des Innen- oder Außenmantelrohrs aufweist.

8. Lenksäule nach einem der vorangehenden Ansprüche, **dadurch gekennzeichnet, dass** Sicherheitselement (7) aus Kunststoffmaterial oder aus Federstahl ausgebildet ist.

9. Lenksäule nach einem der vorangehenden Ansprüche, **dadurch gekennzeichnet, dass** das Sicherheitselement zumindest teilweise reibungsmindernd ausgestaltet ist.

10. Lenksäule nach Anspruch 7, **dadurch gekennzeichnet, dass** zwischen dem Außenmantelrohr (23) und dem Innenmantelrohr (22) eine Energieabsorptionseinrichtung (9) angeordnet ist.

## Claims

1. Steering column (1) for a motor vehicle, comprising a steering column unit (2) with a steering gear-side end and a steering wheel-side end, the steering column unit (2) having an outer steering column tube (23), in which an inner steering column tube (21) is arranged telescopically, and in which steering column unit (2) a steering spindle (3) is mounted such that it can be rotated about a longitudinal axis (22), the steering spindle (3) having, at least in portions, a hollow shaft (31), in which a steering shaft (33) is arranged telescopically, and the steering spindle (3) being mounted rotatably in a rear bearing (24) in the steering wheel-side end portion of the steering column unit (2), a clamping device (5) being provided which has a clamping bolt (51) which extends through slot-like openings (421, 431) in the side cheeks (42, 43) and through openings in the steering column unit (2), a clamping force being exerted on the side cheeks (42, 43) in the fixing position by way of the clamping bolt (51) via a clamping mechanism (53) by way of manual actuation of a clamping lever (52), by way of which clamping force the outer steering column tube (23) is clamped in between the side cheeks (42, 43) in a non-positive manner and, as a result, is fixed relative to the loadbearing unit (4), and the outer steering column tube (23) is likewise braced radially on the inner steering column tube (21), or which steering column (1) has, for motorized adjustment, a motorized actuating drive (62), by which the inner steering column tube (21) can be set relative to the outer steering column tube (23),
**characterized**
**in that** a safety element (7, 8) is arranged between the steering gear-side end of the steering column unit (2) and the rear bearing (24) between the steering column unit (2) and the steering spindle (3), which safety element (7, 8) leaves a circumferential radial safety spacing between the steering column unit (2) and the steering spindle (3) free, which safety spacing is smaller than the radial spacing between the steering column unit (2) and the steering spindle (3) outside the safety element (7, 8) between the steering gear-side end of the steering column unit (2) and the rear bearing (24), the safety element (7, 8) delimiting, by way of its width, an axial safety portion, the width of which is smaller than the diameter of the safety element (7, 8).

2. Steering column according to Claim 1, **characterized in that** the safety element (7, 8) is arranged in a longitudinal region of the hollow shaft (31), in which longitudinal region the steering shaft (33) can be introduced axially into the hollow shaft (31).

3. Steering column according to either of the preceding claims, **characterized in that** the safety element (7, 8) is arranged in a longitudinal region, in which longitudinal region the hollow shaft (33) extends within the steering column unit (2).

4. Steering column according to one of the preceding claims, **characterized in that** the safety element (7) is configured as an annular element.

5. Steering column according to one of the preceding claims, **characterized in that** the safety element (8) is arranged in the steering column unit (2).

6. Steering column according to Claim 5, **characterized in that** the safety element (8) is arranged in the inner steering column tube (21).

7. Steering column according to Claim 5, **characterized in that** the safety element (8) has a radial formed recess of the inner or outer steering column tube, which formed recess runs around at least in portions over the circumference of the steering column unit (2).

8. Steering column according to one of the preceding claims, **characterized in that** the safety element (7) is configured from plastic material or from spring steel.

9. Steering column according to one of the preceding claims, **characterized in that** the safety element is of at least partially friction-reducing configuration.

10. Steering column according to Claim 7, **characterized in that** an energy absorption device (9) is arranged between the outer steering column tube (23) and the inner steering column tube (22).

## Revendications

1. Colonne de direction (1) pour un véhicule automobile, comprenant une unité d'enveloppe (2) avec une extrémité côté boîtier de direction et une extrémité côté volant de direction, l'unité d'enveloppe (2) présentant un tube d'enveloppe extérieur (23) dans lequel est disposé de manière télescopique un tube d'enveloppe intérieur (21), et dans laquelle une barre de direction (3) est supportée de manière à pouvoir tourner autour d'un axe longitudinal (22), la barre de direction (3) présentant au moins en partie un arbre creux (31) dans lequel est disposé, de manière télescopique, un arbre de direction (33), et la barre de direction (3) étant supportée de manière rotative dans un palier arrière (24) dans la portion d'extrémité côté volant de direction de l'unité d'enveloppe (2), un dispositif de serrage (5) étant prévu, lequel présente un boulon de serrage (51) qui s'étend à travers des ouvertures de type fente (421, 431) dans les joues latérales (42, 43) et des ouvertures de passage dans l'unité d'enveloppe (2), une force de serrage étant exercée dans la position de fixation sur les joues latérales (42, 43) par actionnement manuel d'un levier de serrage (52) par le boulon de serrage (51) par le biais d'un mécanisme de serrage (53), par le biais de laquelle le tube d'enveloppe extérieur (23) est serré par engagement par force entre les joues latérales (42, 43) et est fixé de ce fait par rapport à l'unité de support (4) et le tube d'enveloppe extérieur (23) est également serré radialement sur le tube d'enveloppe intérieur (21), ou lequel dispositif de serrage présente, pour le réglage par moteur, un entraînement de commande motorisé (62), par lequel le tube d'enveloppe intérieur (21) peut être ajusté par rapport au tube d'enveloppe extérieur (23),
**caractérisée en ce que**
entre l'extrémité côté boîtier de direction de l'unité d'enveloppe (2) et le palier arrière (24), entre l'unité d'enveloppe (2) et la barre de direction (3) est disposé un élément de sécurité (7, 8) qui laisse une distance de sécurité radiale périphérique entre l'unité d'enveloppe (2) et la barre de direction (3), laquelle est inférieure à la distance radiale entre l'unité d'enveloppe (2) et la barre de direction (3) à l'extérieur de l'élément de sécurité (7, 8) entre l'extrémité côté boîtier de direction de l'unité d'enveloppe (2) et le palier arrière (24), l'élément de sécurité (7, 8) limitant avec sa largeur une portion de sécurité axiale dont la largeur est inférieure au diamètre de l'élément de sécurité (7, 8).

2. Colonne de direction selon la revendication 1, **caractérisée en ce que** l'élément de sécurité (7, 8) est disposé dans une région longitudinale de l'arbre creux (31) dans laquelle l'arbre de direction (33) peut être inséré axialement dans l'arbre creux (31).

3. Colonne de direction selon l'une quelconque des revendications précédentes, **caractérisée en ce que** l'élément de sécurité (7, 8) est disposé dans une région longitudinale dans laquelle l'arbre creux (33) s'étend à l'intérieur de l'unité d'enveloppe (2) .

4. Colonne de direction selon l'une quelconque des revendications précédentes, **caractérisée en ce que** l'élément de sécurité (7) est réalisé sous forme d'élément annulaire.

5. Colonne de direction selon l'une quelconque des revendications précédentes, **caractérisée en ce que** l'élément de sécurité (8) est disposé dans l'unité d'enveloppe (2).

6. Colonne de direction selon la revendication 5, **caractérisée en ce que** l'élément de sécurité (8) est disposé dans le tube d'enveloppe intérieur (21).

7. Colonne de direction selon la revendication 5, **caractérisée en ce que** l'élément de sécurité (8) présente une formation radiale du tube d'enveloppe intérieur ou extérieur au moins partiellement périphérique sur la périphérie de l'unité d'enveloppe (2).

8. Colonne de direction selon l'une quelconque des revendications précédentes, **caractérisée en ce que** l'élément de sécurité (7) est réalisé en matière plastique ou en acier à ressort.

9. Colonne de direction selon l'une quelconque des revendications précédentes, **caractérisée en ce que** l'élément de sécurité est configuré au moins en partie de manière à réduire les frottements.

10. Colonne de direction selon la revendication 7, **caractérisée en ce qu'**entre le tube d'enveloppe extérieur (23) et le tube d'enveloppe intérieur (22) est disposé un dispositif d'absorption d'énergie (9) .
